# EUROPEAN PATENT APPLICATION

(11) **EP 4 822 143 A1**
(43) Date of publication of application: **14.10.2026**
(21) Application number: 26165069.1
(22) Date of filing: 16.03.2026
(51) Int. Cl.: F01D 5/20, F01D 5/18

(54) **AIRFOIL FOR A TURBINE ENGINE WITH A COOLING HOLE OUTLET AT A TIP RAIL**

(30) Priority: 24.03.2025 US 202519087909
(71) Applicant: General Electric Company, Evendale, OH 45215 (US)
(72) Inventor: DAVENPORT, Emily Hope, Evendale, 45215 (US); DEL VALLE RIVERA, Pedro, West Chester, 45069 (US); WHEATLEY, Edward Samuel, West Chester, 45069 (US); HERMAN, William C., West Chester, 45069 (US)
(74) Representative: Openshaw & Co.

(57) **Abstract**

An airfoil (100) for a turbine engine (10) has an exterior wall (102), a set of cooling conduits (120), a tip rail (122) and an outlet. The exterior wall (102, 202, 302) bounds an interior (103). The exterior wall (102) defines extends between a leading edge (104) and a trailing edge (106) in a chordwise direction (Cd). The exterior wall (102) extends between a root (108) and a tip (110) in a spanwise direction (Sd). The set of cooling conduits (120) are located within the interior (103). The tip rail (122) extends in the spanwise direction (Sd). The outlet is located along the tip rail (122).

## Description

### TECHNICAL FIELD

The disclosure generally relates to an airfoil for a turbine engine.

### BACKGROUND

Turbine engines, and particularly gas or combustion turbine engines, are rotary engines that extract energy from a flow of combusted gases passing through the engine and flowing over a multitude of airfoils, including stationary vanes and rotating turbine blades.

Turbine engines for aircraft are designed to operate at high temperatures to maximize engine efficiency, so cooling of certain engine components, such as the high pressure turbine and the low pressure turbine, can be beneficial. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine. Contemporary turbine blades and other engine components generally include one or more interior cooling circuits for routing the cooling air through the engine component to cool different portions of the engine component.

### BRIEF DESCRIPTION OF THE DRAWINGS

A full and enabling disclosure, including the best mode thereof, directed to one of ordinary skill in the art, is set forth in the specification, which makes reference to the appended figures in which:
FIG. 1 is a schematic cross-sectional diagram of a turbine engine for an aircraft, the turbine engine including a compressor section, a combustion section and a turbine in accordance with various aspects described herein.
FIG. 2 is a schematic perspective view of an airfoil suitable for use within the turbine engine of FIG. 1, further illustrating the airfoil having a tip rail and a set of outlets along a respective portion of the tip rail in accordance with various aspects described herein.
FIG. 3 is a schematic cross-sectional view of a portion of the airfoil as seen from sectional line III-III of FIG. 2, further illustrating a fluid passage having a metering section and a diffuser section terminating at a respective outlet of the set of cooling hole outlets in accordance with various aspects described herein.
FIG. 4 is a top-down view of the airfoil as seen from sight line IV-IV of FIG. 2, further illustrating a chordwise spacing of the set of cooling hole outlets in accordance with various aspects described herein.
FIG. 5 is a schematic perspective view of an exemplary airfoil suitable for use as the airfoil of FIG. 2, further illustrating the airfoil having a tip rail, and a set of outlets along a respective portion of the tip rail, and a protuberance formed against the tip rail in accordance with various aspects described herein.
FIG. 6 is a schematic cross-sectional view of a portion of the airfoil as seen from sectional line VI-VI of FIG. 5, further illustrating a respective outlet of the set of cooling hole outlets at least partially formed within the protuberance in accordance with various aspects described herein.
FIG. 7 is a schematic top-down view of an exemplary airfoil suitable for use as the airfoil of FIG. 2, further illustrating the airfoil having a leading edge, a trailing edge, a tip, and a set of cooling hole outlets located along the tip, the set of cooling hole outlets being oriented towards at least one of the leading edge or the trailing edge in accordance with various aspects described herein.

### DETAILED DESCRIPTION

Aspects of this disclosure are related to a turbine engine having an airfoil. The airfoil has an external wall, a tip rail, and a set of cooling hole outlets. The external wall extends between a tip and a root, and between a leading edge and a trailing edge. The external wall defines a pressure side and a suction side. The tip rail includes a side surface and a terminal end surface. The side surface of the tip rail defines an open area, referred to as a tip plenum, formed along a respective portion of the tip. As used herein, the tip rail is defined as a body of the airfoil that extends outward from, in a spanwise direction, a tip end wall of the airfoil and defines a perimeter of a tip plenum. The tip rail can extend around an entirety of the tip of the airfoil, or the tip rail can extend around less than an entirety of the tip of the airfoil. The terminal end surface forms a tip rail edge with the side surface. The set of cooling hole outlets open through the side surface, the terminal end surface, and the tip rail edge. The set of cooling hole outlets are located along the tip. Specifically, the set of cooling hole outlets are located along the terminal end surface.

The set of cooling hole outlets are used to distribute a flow of cooling fluid along a respective portion of the airfoil. The formation of the set of cooling hole outlets along all three of the side surface, the terminal end surface, and the tip rail edge ensure a continued exhaust of the cooling fluid from the set of cooling hole outlets. As a non-limiting example, during operation of the turbine engine, the terminal end surface can get closer to confronting portions of the turbine engine (e.g., an engine casing); thus reducing the area between the airfoil and the confronting portion of the turbine engine. In some instances, the space between the terminal end surface and the confronting portion of the turbine engine can get small enough to restrict a flow of fluid through the respective portion of the set of cooling hole outlets formed along the terminal end surface. The formation of the set of cooling hole outlets to be along each of the side surface, the terminal end surface, and the tip rail edge ensures that the flow of cooling fluid exiting the set of cooling hole outlets will be sufficient even when the space between the terminal end surface and the confronting portion is small enough to restrict the flow of cooling fluid exiting the portion of the set of cooling hole outlets located along the terminal end surface.

For purposes of illustration, the present disclosure will be described with respect to a turbine engine. It will be understood, however, that aspects of the disclosure described herein are not so limited and that an airfoil as described herein can be implemented in various engines, including but not limited to turbojet, turboprop, turboshaft, and turbofan engines. Aspects of the disclosure discussed herein may have general applicability within non-aircraft engines having an airfoil, such as other mobile applications and non-mobile industrial, commercial, and residential applications.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore / forward can mean upstream and aft / rearward can mean downstream.

Additionally, as used herein, the terms "axial" and "longitudinal" both refer to a direction parallel to a centerline axis of an object, while the terms "radial" or "radially" refer to a direction that is perpendicular to the axial direction or away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

Further, as used herein, the term "fluid" or iterations thereof can refer to any suitable fluid within the turbine engine at least a portion of the turbine engine is exposed to such as, but not limited to, combustion gases, ambient air, pressurized airflow, working airflow, or any combination thereof. It is yet further contemplated that the turbine engine can be another suitable turbine engine such as, but not limited to, a steam turbine engine or a supercritical carbon dioxide turbine engine. As a non-limiting example, the term "fluid" can refer to steam in a steam turbine engine, or to carbon dioxide in a supercritical carbon dioxide turbine engine.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

"Diameter" or "hydraulic diameter" (Dh) as used herein is in reference to a characteristic diameter of a singular cooling hole outlet of the set of cooling hole outlets. Hydraulic diameter is a commonly used term when handling flow in non-circular tubes and channels. When the cross-section is uniform along the tube or channel length, it is defined as ${D}_{H} = \frac{4 a}{p}$ where "a" is the cross- sectional area of the flow and "p" is the wetted perimeter of the cross-section. The hydraulic diameter can further be related to the Reynolds number of the fluid flow. As such, the hydraulic diameter can be used to at least partially quantify the flow of fluid through an area or pipe. It will be appreciated that the specific calculations for the hydraulic diameter are known and referenced herein without direct reference.

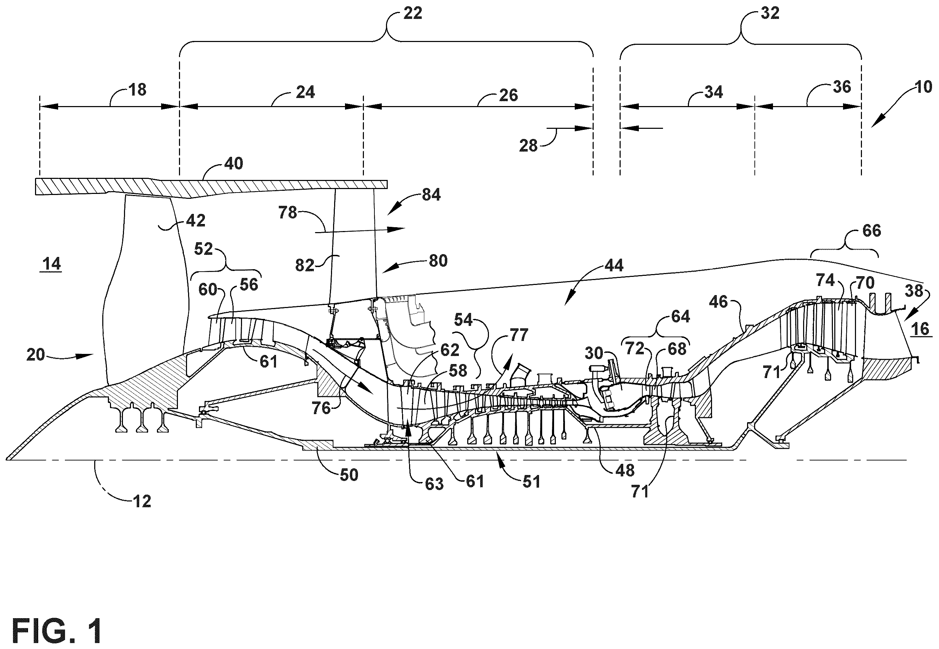

FIG. 1 is a schematic cross-sectional diagram of a turbine engine 10 for an aircraft. The turbine engine 10 has a generally longitudinally extending axis or engine centerline 12 extending forward 14 to aft 16. The turbine engine 10 includes, in a downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38.

The fan section 18 includes a fan casing 40 surrounding the fan 20. The fan 20 includes a set of fan blades 42 disposed radially about the engine centerline 12. The HP compressor 26, the combustor 30, and the HP turbine 34 form an engine core 44 of the turbine engine 10, which generates combustion gases. The engine core 44 is surrounded by an engine casing 46, which can be coupled with the fan casing 40.

An HP shaft 48 is disposed coaxially about the engine centerline 12 of the turbine engine 10 and drivingly connects the HP turbine 34 to the HP compressor 26. An LP shaft 50, which is disposed coaxially about the engine centerline 12 of the turbine engine 10 within the larger diameter annular HP shaft 48, drivingly connects the LP turbine 36 to the LP compressor 24 and fan 20. The shafts 48, 50 are rotatable about the engine centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 to compress or pressurize the stream of fluid passing through the stage. In a single compressor stage 52, 54, the set of compressor blades 56, 58 can be provided in a ring and can extend radially outward relative to the engine centerline 12, from a blade platform to a tip, while the corresponding static compressor vanes 60, 62 are positioned upstream of and adjacent to the set of compressor blades 56, 58. It is noted that the number of blades, vanes, and compressor stages shown in FIG. 1 were selected for illustrative purposes only, and that other numbers are possible.

The set of compressor blades 56, 58 for a stage of the compressor 24, 26 can be mounted to (or integral to) a disk 61, which is mounted to the corresponding one of the HP and LP shafts 48, 50. The static compressor vanes 60, 62 for a stage of the compressor 24, 26 can be mounted to the engine casing 46 in a circumferential arrangement.

The HP turbine 34 and the LP turbine 36 respectively include a plurality of turbine stages 64, 66, in which a set of turbine blades 68, 70 are rotated relative to a corresponding set of turbine vanes 72, 74, also referred to as a nozzle, to extract energy from the stream of fluid passing through the stage. In a single turbine stage 64, 66, the set of turbine blades 68, 70 can be provided in a ring and can extend radially outward relative to the engine centerline 12 while the corresponding set of turbine vanes 72, 74 are positioned upstream of and adjacent to the set of turbine blades 68, 70. It is noted that the number of blades, vanes, and turbine stages shown in FIG. 1 were selected for illustrative purposes only, and that other numbers are possible.

The set of turbine blades 68, 70 for a stage of the turbine can be mounted to a disk 71, which is mounted to the corresponding one of the HP and LP shafts 48, 50. The set of turbine vanes 72, 74 for a stage of the compressor can be mounted to the engine casing 46 in a circumferential arrangement.

It will be appreciated that the turbine engine 10 can be split into at least two separate portions: a rotor portion and a stator portion. The rotor portion can be defined as any portion of the turbine engine 10 that rotates about a respective rotational axis. The stator portion can be defined by a combination of non-rotating elements provided within the turbine engine 10. As a non-limiting example, the rotor portion can include one or more of the set of fan blades 42, the set of compressor blades 56, 58, or the set of turbine blades 68, 70. As a non-limiting example, the stator portion can include one or more of the set of airfoil guide vanes 82 (described below), the static compressor vanes 60, 62, or the set of turbine vanes 72, 74.

In operation, the airflow exiting the fan section 18 is split such that a portion of the airflow is channeled into the LP compressor 24, which then supplies a pressurized airflow 76 to the HP compressor 26, which further pressurizes the air. The pressurized airflow 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the turbine engine 10 via the exhaust section 38. The driving of the LP turbine 36 drives the LP shaft 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components for cooling. The temperature of pressurized airflow 76 entering the combustor 30 is significantly increased above the bleed air temperature. The bleed air 77 may be used to reduce the temperature of the core components downstream of the combustor 30. The bleed air 77 can also be utilized by other systems.

Some of the air supplied by the fan 20 can bypass the engine core 44 and be used for cooling of portions, especially hot portions, of the turbine engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid (Cf) can be, but are not limited to, fluid discharged from the LP compressor 24 or the HP compressor 26.

A remaining portion of the airflow exiting the fan section 18, referred to as a bypass air 78, bypasses the LP compressor 24 and engine core 44 and exits the turbine engine 10 through a stationary vane row, and more particularly an outlet guide vane assembly 80, comprising a set of airfoil guide vanes 82, at a fan exhaust side 84. More specifically, a circumferential row of radially extending airfoil guide vanes 82 are utilized adjacent the fan section 18 to exert at least some directional control of the bypass air 78.

The turbine engine 10, as illustrated, is a turbofan engine. It will be appreciated, however, that the turbine engine 10 can be any suitable engine such as, but not limited to, a turboprop engine, a turboshaft engine, a ducted turbofan engine, an unducted engine, or an open rotor turbine engine. As a non-limiting example, the turbine engine 10 can be an unducted turbine engine. The unducted turbine engine includes a set of external fan blades and external fan vanes that extend radially outward from a nacelle or exterior casing that houses the engine core. The external fan blades and the external fan vanes are similar in function with respect to the set of fan blades 42 and the set of airfoil guide vanes 82, respectively, of the turbine engine 10. It will be appreciated that at least a portion of the external fan blades or the external vane blades can define a radial extreme (e.g., a radially farthest portion from the engine centerline 12) in an unducted turbine engine. In other words, no portion of the turbine engine is provided radially outward from the external fan blades or external fan vanes in an unducted turbine engine.

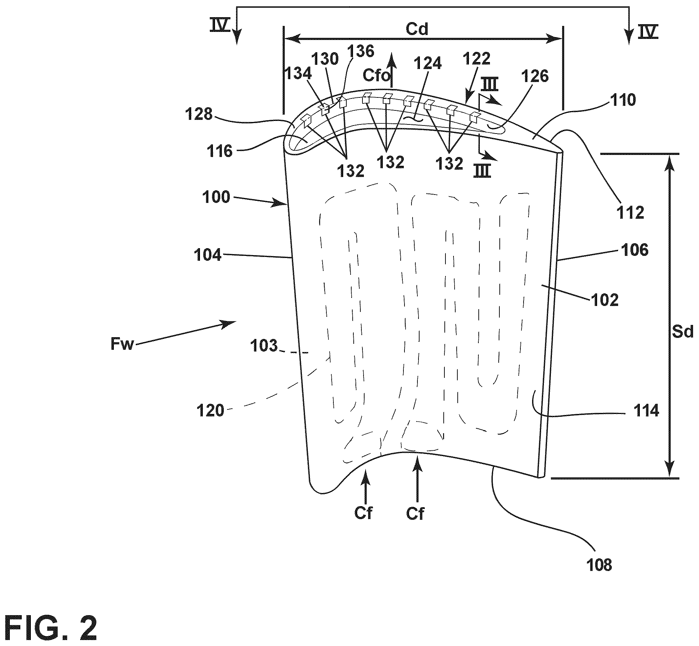

FIG. 2 is a schematic perspective view of airfoil 100 suitable for use within the turbine engine 10 of FIG. 1. The airfoil 100 includes a set of cooling holes outlets 132. The set of cooling hole outlets 132 distribute a flow of outlet cooling fluid (Cfo) along a respective portion of the airfoil 100. The airfoil 100 can be various airfoils or structures located within the turbine engine 10. As a non-limiting example, the airfoil 100 can be a blade, a vane, a shroud, a combustion liner, or any other engine component of the turbine engine 10. As a non-limiting example, the airfoil 100 be included within at least one of the set of fan blades 42 of FIG. 1, the set of compressor blades 56, 58 of FIG. 1, the set of compressor vanes 60, 62 of FIG. 1, the set of turbine blades 68, 70 of FIG. 1, the set of turbine vanes 72, 74 of FIG. 1, the set of airfoil guide vanes 82 of FIG. 1, or a combination thereof.

The airfoil 100 has an exterior wall 102, a tip rail 122, and the set of cooling hole outlets 132. The exterior wall 102 extends between a root 108 and a tip 110 in a spanwise direction (Sd). The exterior wall 102 includes a tip end wall 116 at least partially defining the tip 110. The exterior wall 102 extends between a leading edge 104 and a trailing edge 106 in a chordwise direction (Cd). The exterior wall 102 defines a pressure side 114 and a suction side 112. The exterior wall 102 defines an interior 103 of the airfoil 100.

The airfoil 100 includes a set of cooling conduits 120 that extend through respective portions of the interior 103. Each cooling conduit of the set of cooling conduits 120 is defined as a tube, channel, or passageway formed within the interior that is configured to direct a flow of fluid within the interior 103 of the airfoil 100. The set of cooling conduits 120 includes various numbers of cooling conduits, such as two cooling conduits as illustrated. However, it will be appreciated that the set of cooling conduits 120 include any number of one or more conduits.

The airfoil 100 includes a tip end wall 116. The tip rail 122 extends outwardly from the tip end wall 116 in the spanwise direction (Sd). The tip rail 122 includes a terminal end surface 128, and a side surface 126. The side surface 126 and the tip end wall 116 collectively form a tip plenum 124. The side surface 126 faces the tip plenum 124. The tip 110 of the airfoil 100 is defined as a termination of the airfoil 100 in the spanwise direction (Sd) from the root 108. As such, the tip 110 is defined at least in part by the tip end wall 116 and the terminal end surface 128. The tip rail is at least partially formed by the exterior wall 102 such that the tip rail 122 forms the termination of the exterior wall 102 in the spanwise direction (Sd).

The terminal end surface 128 extends between and interconnects the exterior wall 102 and the side surface 126. The terminal end surface 128 meets with the side surface 126 at a tip rail edge 130. It will be appreciated that the tip rail edge 130 defines a transition between the terminal end surface 128 and the side surface 126. The side surface 126 is defined as a portion of the tip rail 122 that extends from the tip end wall 116 in the spanwise direction (Sd) to the terminal end surface 128.

The set of cooling hole outlets 132 are located along a respective portion of the tip rail 122. Specifically, the set of cooling hole outlets 132 are located along the tip rail edge 130. Each cooling hole outlet of the set of cooling hole outlets 132 includes a first portion 134 and a second portion 136. The first portion 134 is located along the terminal end surface 128. The first portion 134 terminates along the terminal end surface 128. The first portion 134 terminates prior to the exterior wall 102 of the tip rail 122. Put another way, a termination of the first portion 134 refers to a stop or termination of the first portion 134 before the first portion 134 joins with or otherwise reaches the exterior wall 102 of the tip rail 122 (e.g., the first portion 134 does not extend to the exterior wall 102 of the tip rail 122). The second portion 136 is located along the side surface 126. The second portion 136 terminates along the side surface 126. The second portion 136 terminates prior to the tip end wall 116 of the tip rail 122. Put another way, a termination of the second portion 136 refers to a stop or termination of the second portion 136 before the second portion 136 joins with or otherwise reaches the tip end wall 116 (e.g., the second portion 136 does not extend to the tip end wall 116).

The first portion 134 meets with the second portion 136 at the tip rail edge 130. The first portion 134 and the second portion 136 collectively form a continuous opening that constitutes a respective cooling hole outlet of the set of cooling hole outlets 132. The set of cooling hole outlets 132 can have various cross-sectional areas. As a non-limiting example, a respective outlet of the set of cooling hole outlets 132 can have the first portion 134 and the second portion 136 that each include a rectangular cross-sectional area, as illustrated. For purposes of illustration, a delineation between the first portion 134 and the second portion 136 is shown in phantom lines.

It will be appreciated that the first portion 134 can have a first cross-sectional area and the second portion 136 can have a second cross-sectional area. The first cross-sectional area can be equal to the first cross-sectional area. The first cross-sectional area can be less than or greater than the second cross-sectional area. As a non-limiting example, the first cross-sectional area can be greater than or equal to 50% of and less than or equal to 150% of the second cross-sectional area. The first cross-sectional area and the second cross-sectional area can be the same or different shapes. As a non-limiting example, the first cross-sectional area of the first portion 134 can have a half-oval cross-sectional area, while the second cross-sectional area of the second portion 136 can have a rectangular cross-sectional area. It will be appreciated that the first portion 134, the second portion 136, and the cooling hole outlet 132 can have various cross-sectional areas such as, but not limited to, an ellipse or oval, a racetrack, a slot, a circle, a polygon (e.g., a rectangle, a triangle), or any combination thereof.

The set of cooling hole outlets 132 are provided along any suitable portion of the tip rail 122. The set of cooling hole outlets 132 are provided along at least a portion of the tip rail 122 corresponding to the suction side 112, as illustrated. It will be appreciated, however, that the set of cooling hole outlets 132 can also be formed along a portion of the tip rail 122 corresponding to the pressure side 114. The set of cooling hole outlets 132, specifically the second portion 136 of each cooling hole outlet of the set of cooling hole outlets 132 opens to the tip plenum 124.

During operation, a working airflow (Fw), flows along the exterior wall 102 of the airfoil 100. A cooling fluid (Cf) can be provided to the set of cooling conduits 120 within the interior 103. The cooling fluid (Cf) is any suitable cooling fluid from an upstream portion of the turbine engine 10 such as, but not limited to, the bleed air 77 of FIG. 1, the bypass air 78 of FIG. 1, or a combination thereof. The cooling fluid (Cf) is ultimately fed through the set of cooling hole outlets 132 as an outlet cooling fluid (Cfo) and exhausted along a respective portion of the tip rail 122. The outlet cooling fluid (Cfo) is illustrated as being emitted from a single outlet of the set of cooling hole outlets 132, however, it will be appreciated that the outlet cooling fluid (Cfo) is emitted from each cooling hole outlet of the set of cooling hole outlets 132 during operation. The outlet cooling fluid (Cfo) is used to form a layer of fluid insulation between the working airflow (Fw) and a respective portion of the airfoil 100, shielding the airfoil 100 from the working airflow (Fw) such that working airflow (Fw) does not overly heat the respective portion of the airfoil 100.

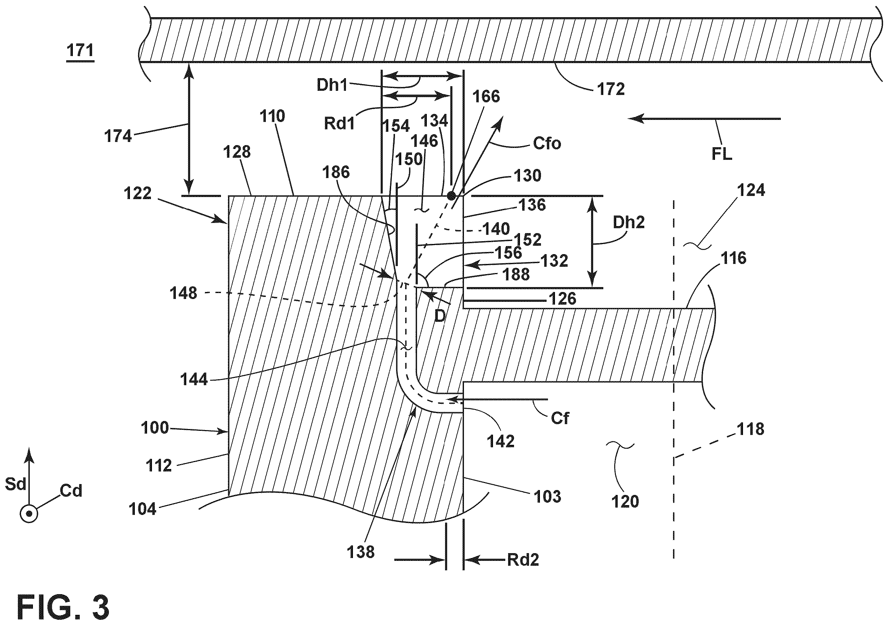

FIG. 3 is a schematic cross-sectional view of the airfoil 100 as seen from sectional line III-III of FIG. 2. For the purposes of illustration, the airfoil 100 is shown to be located within a turbine engine 171 including an engine component 172. The turbine engine 171 can, for example, be the turbine engine 10 of FIG. 1 or any other suitable turbine engine. The engine component 172 can, for example, be an engine casing (e.g., the engine casing 46 of FIG. 2). A gap 174 is formed between the engine component 172 and a nearest portion (e.g., the terminal end surface 128) of the airfoil 100 in the spanwise direction (Sd). Specifically, the gap 174 is formed between the engine component 172 and the terminal end surface 128 in the spanwise direction (Sd). The airfoil 100 includes a mean camber line 118 extending in the chordwise direction (Cd). The mean camber line 118 extends between the leading edge 104 and the trailing edge 106 and is equidistant between the suction side 112 and the pressure side 114.

The airfoil 100 includes a set of fluid passages 138. Each fluid passage of the set of fluid passages 138 includes and extends between an inlet 142 and at least one outlet of the set of cooling hole outlets 132. The inlet 142 is in direct fluid communication with a respective portion of the set of cooling conduits 120 formed within the interior 103. While illustrated as terminating at a singular outlet of the set of cooling hole outlets 132, it will be appreciated that a singular fluid passage of the set of fluid passages 138 can terminate at any number of one or more outlets of the set of cooling hole outlets 132. That is, one fluid passage of the set of fluid passages 138 can feed more than one outlet of the set of cooling hole outlets 132.

Each fluid passage of the set of fluid passages 138 includes a passage centerline 140. The passage centerline 140 is equidistant between opposing walls of the fluid passage 138 and extends between the inlet 142 and the cooling hole outlet 132. The passage centerline 140 intersects the cooling hole outlet 132 at a midpoint 166. Each fluid passage of the set of fluid passages 138 can have a respective cross-sectional area or shape when viewed along a plane that is taken perpendicular to the passage centerline 140 at a particular position. The cross-sectional area along the set of fluid passages 138 can be constant or non-constant extending axially along the passage centerline 140. The cross-sectional shape can be any shape such as, but not limited to, at least one of circular, rectangular, triangular, oblong, or a combination thereof.

Each fluid passage of the set of fluid passages 138 includes a covered portion 144 and an uncovered portion 146. As used herein, the term "covered portion" refers to a portion of the fluid passage that is sheltered or otherwise covered from a fluid that is exterior the airfoil 100 (e.g., the working airflow (Fw) or Fig. 2). As used herein, the term 'uncovered portion" refers to a portion of the film hole that breaks out from the covered portion 144 and includes a portion that is exposed to the fluid exterior the airfoil 100. The covered portion 144 meets the uncovered portion 146 at a transition 148, illustrated in phantom lines. The covered portion 144 extends from the inlet 142 and to the transition 148. The uncovered portion 146 extends from the transition 148 and to the cooling hole outlet 132.

The covered portion 144 includes a metering hole defined by a minimum radial width (D) of the fluid passage 138. It will be appreciated that one or more locations along the fluid passage 138 between the transition 148 and the inlet 142 can be defined by the minimum radial width (D). As a non-limiting example, an entirety of the covered portion 144 can have a constant cross-sectional area and therefore the entirety of the covered portion 144 can be defined by the minimum radial width (D). Alternatively, one or more sections of the covered portion 144 can have a respective radial width greater than the radial width (D) of the metering portion 144. As a non-limiting example, the minimum radial width (D) coincides with the transition 148.

The uncovered portion 146 is defined as an area of the fluid passage 138 with an increasing cross-sectional area in a downstream direction, with respect to a flow direction of a fluid through the set of fluid passages 138. The uncovered portion includes a first surface 186 and a second surface 188. The first surface 186 extends from the transition 148 and terminates along the terminal end surface 128 and partially defines the first portion 134 at the cooling hole outlet 132. The second surface 188 terminates along the side surface 126 and partially defines the second portion 136 at the cooling hole outlet 132. The second surface defines a respective portion of the second portion 136 of the cooling hole outlet 132.

At least one of the first surface 186, the second surface 188, or a combination thereof extends radially outward from the transition 148 and to a respective portion of the cooling hole outlet 132. The first surface 186 forms a first included angle 154 with respect to a first reference line 150. The first reference line 150 extends in the spanwise direction (Sd) from the transition 148. The first reference line 150 intersects the first surface 186 at the transition 148. In a non-limiting example, the first included angle 154 is greater than or equal to -15 degrees and less than or equal to 25 degrees. The second surface 188 forms a second included angle 156 with respect to a second reference line 152. The second reference line 152 extends in the spanwise direction (Sd) from the transition 148. The second reference line 152 intersects the second surface 188 at the transition 148. In a non-limiting example, the second included angle 156 is greater than or equal to 50 degrees and less than or equal to 120 degrees. The sizing of the first included angle 154 and the second included angle 156 allows for the uncovered portion 146 to exhaust the outlet cooling fluid (Cfo) in a desired direction and at a desired velocity and pressure. The desired velocity and pressure is defined as a predetermined velocity or range of velocities, and a predetermined pressure or range of pressures that ensures that that the exhaust cooling fluid (Cfo) spreads along regions of the airfoil 100 that require cooling (e.g., the exterior wall 102, the tip rail 122, etc.).

The first surface 186 and the second surface 188 can extend linearly. As such, the first included angle 154 and the second included angle 156 can be held constant along the first surface 186 and the second surface 188, respectively, between the transition 148 and the cooling hole outlet 132. Alternatively, it is contemplated that at least a portion of the first surface 186, the second surface 188, or a combination thereof can extend non-linearly such that the first included angle 154 or the second included angle 156, respectively, is non-constant between the transition 148 and the cooling hole outlet 132.

The midpoint 166 defines a center of the cooling hole outlet 132 opening along the tip rail 122. The midpoint 166 can be located at or offset from the tip rail edge 130. As illustrated, the midpoint 166 is located along the first portion 134. It will be appreciated, however, that the midpoint 166 can be located along the second portion 136. The location of the midpoint 166 is based on the sizing of the first included angle 154 and the second included angle 156. As a non-limiting example, a larger first included angle 154 and a smaller second included angle 156 will position the midpoint 166 closer to the first surface 186. As a non-limiting example, a larger second included angle 156 and a smaller first included angle 154 will position the midpoint 166 closer to the second surface 188. A location of the midpoint 166 can be the same between or vary between outlets of the set of cooling hole outlets 132.

The midpoint 166 is located a first radial distance (Rd1) from the terminal end surface 128. Specifically, the first radial distance (Rd1) is measured as a maximum radial straight-line distance from the midpoint 166 and to an opposing portion of where the first surface 186 meets the terminal end surface 128. The first radial distance (Rd1) is measured with respect to the mean camber line 118. The first radial distance (Rd1) is quantified in terms of the radial width (D) of the covered portion 144. Specifically, the first radial distance (Rd1) is greater than or equal to 0.25 times and less than or equal to 6 times the radial width (D).

The midpoint 166 is located a second radial distance (Rd2) from the side surface 126. Specifically, the second radial distance (Rd2) is measured as a maximum radial straight-line distance from the midpoint 166 and to an opposing portion of where the second surface 188 meets the side surface 126. The second radial distance (Rd2) is measured with respect to the mean camber line 118. The second radial distance (Rd2) is quantified in terms of the radial width (D) of the covered portion 144. Specifically, the second radial distance (Rd2) is greater than or equal to 0.25 times and less than or equal to 6 times the radial width (D). It will be appreciated that the midpoint 166 can be radially outward from where the second surface 188 meets the side surface 126, radially inward from where the second surface 188 meets the side surface 126, or radially coincide with where the second surface 188 meets the side surface 126, with respect to the mean camber line 118. The positioning of the midpoint 166 through the first radial distance (Rd1) and the second radial distance (Rd2) is selected to determine a direction of the outlet cooling fluid (Cfo) that is exhausted from the cooling hole outlet 132, which will be described in further detail below.

The first portion 134 includes a first hydraulic diameter (Dh1) defined as the area of the first portion 134 measured between where the first surface 186 meets the terminal end surface 128, and the tip rail edge 130. The second portion 136 includes a second hydraulic diameter (Dh2) measured between where the second surface 188 meets the side surface 126, and the tip rail edge 130. In a non-limiting example, the first hydraulic diameter (Dh1) can be equal to the second hydraulic diameter (Dh2). In an alternate, non-limiting example, the first hydraulic diameter (Dh1) can be non-equal to the second hydraulic diameter (Dh2). In yet another non-limiting example, the first hydraulic diameter (Dh1) can be greater than or equal to 50% and less than or equal to 150% of the second hydraulic diameter (Dh2). A summation of the first hydraulic diameter (Dh1) and the second hydraulic diameter (Dh2) can be greater than or equal to 0.003 inches and less than or equal to 0.12 inches, while greater or lesser values are within the scope of this disclosure. Such a sizing of the first hydraulic diameter (Dh1) and the second hydraulic diameter (Dh2) ensures that the volumetric flow rate of the outlet cooling fluid (Cfo) is adequate during operation of the turbine engine 171, which will be described in further detail below.

During operation, the working airflow (Fw) of FIG. 2 can flow from the pressure side 114 (FIG. 2) to the suction side 112 over the tip 110 as a leakage airflow (FL). The leakage airflow (FL) can flow towards the gap 174 between terminal end surface 128 to the engine component 172. The leakage airflow (FL) is created due to the pressure differential between the pressure side 114 and the suction side 112. Specifically, the suction side 112 has a lower pressure than the pressure side 114 such that the working airflow (Fw) is urged towards the suction side 112 as the leakage airflow (FL) along the tip 110. The outlet cooling fluid (Cfo) is exhausted into at least a portion of the tip plenum 124, the gap 174, or a combination thereof.

The outlet cooling fluid (Cfo) and its related structure further improves cooling effectiveness of the suction side 112 of the airfoil 100. Specifically, the outlet cooling fluid (Cfo) is exhausted out of the set of cooling hole outlets 132 and urged towards the suction side 112 due to the pressure differential as discussed herein. At least a portion of the outlet cooling fluid (Cfo) can flow along a respective portion of the side surface 126, terminal end surface 128, and/or the exterior wall 102 of the airfoil 100 along the suction side 112, thus creating a layer of insulation along the respective portion of the exterior wall 102 from the working airflow (Fw) and cooling the respective portion of the exterior wall 102. It is further contemplated that the airfoil 100, specifically the exterior wall 102 or the airfoil 100, can be made of a conductive material. As such, the relatively cool cooling fluid (Cf) within the fluid passage 138 can cool the exterior wall 102 through the conductive properties of the exterior wall 102. It will be further appreciated that the outlet cooling fluid (Cfo) or otherwise the cooling fluid (Cf) within the fluid passage 138 can be used to cool other nearby portions of the airfoil 100 such as the tip plenum 124 and/or the tip rail 122.

It is contemplated that the size of the gap 174 can vary during operation of the turbine engine 171. As a non-limiting example, the airfoil 100 and the engine component 172 can move closer to one another and reduce the size of the gap 174 during engine operation. The movement of the airfoil 100 can be caused through, by way of non-limiting example, thermal expansion, movement of the airfoil 100 in the spanwise direction (Sd), circumferential forces applied to the airfoil 100, or the like. It is contemplated that minimizing the size of the gap 174, but ensuring that the gap is non-zero, helps in increasing the efficiency of the turbine engine.

The outlet cooling fluid (Cfo) provides a layer of fluid between the engine component 172 and the terminal end surface 128 and reduces the thermal expansion of the airfoil 100 away from the engine component 172 in the spanwise direction (Sd). Ensuring that the gap 174 is non-zero during operation ensures that the terminal end surface 128 does not come into contact with the engine component 172 during operation of the turbine engine 171. Extended contact between the engine component 172 and the airfoil 100 can cause damage to at least one of the engine component 172 or the airfoil 100.

It is contemplated that the variation of the gap 174 during operation of the turbine engine 171 can cause a restriction of the outlet cooling fluid (Cfo) along a respective portion of the cooling hole outlet 132. Specifically, as the gap 174 becomes smaller, it can become more difficult for the outlet cooling fluid (Cfo) to exit the first portion 134 due to local increases in pressure at the gap 174. If the cooling hole outlet 132 were designed with just the first portion 134 and not the second portion 136 or if the gap 174 became too small during variation of the gap 174, the flow of cooling fluid (Cf) through the set of cooling conduits 120 and the fluid passage 138 can become overly restricted (e.g., pressurized). Thus the cooling conduits 120 would be prevented from providing sufficient volumes of the flow of cooling fluid (Cf) (e.g., an adequate amount of the flow of cooling fluid (Cf) to cool the respective portions of the airfoil 100) out of the cooling hole outlet 132 to have the desired effectiveness of cooling for airfoil durability (e.g., a predetermined amount of cooling of the respective portions of the airfoil 100 through use of the flow of cooling fluid (Cfo) that is sufficient to prevent damage to the respective portions of the airfoil 100 due to heating of the airfoil 100 by the working airflow (Fw)). Further, if the cooling fluid (Cf) is prevented from flowing out of the cooling hole outlet 132, the gap 174, in some cases, could become zero thus causing contact between the engine component 172 and the airfoil 100. Creating the cooling hole outlet 132 with both the first portion 134 and the second portion 136 ensures that the outlet cooling fluid (Cfo) has a sufficient area (e.g., the second portion 136) to flow out of. As such, the cooling fluid (Cfo) has the volumetric flow rate needed for cooling of the respective portion of the airfoil 100, and maintaining the non-zero gap 174.

The sizing the cooling hole outlet 132 ensures adequate cooling of the airfoil 100 and continued non-zero sizing of the gap 174. Specifically, selection of the first radial distance (Rd1), the second radial distance (Rd2), the radial width (D), the first hydraulic diameter (Dh1), and the second hydraulic diameter (Dh2) ensures that a sufficient volume of outlet cooling fluid (Cfo) e.g., an adequate amount of the flow of cooling fluid (Cf) to cool the respective portions of the airfoil 100) is exhausted from the cooling hole outlet 132 in order to provide sufficient cooling along the airfoil 100. Further, selection of the first radial distance (Rd1), the second radial distance (Rd2), the radial width (D), the first hydraulic diameter (Dh1), and the second hydraulic diameter (Dh2) ensures that a sufficient volume of outlet cooling fluid (Cfo) is exhausted from the cooling hole outlet 132 in order to keep the gap 174 at a non-zero value.

Having the first radial distance (Rd1) be non-zero ensures that the first portion 134 terminates along the terminal end surface 128 and not a portion of the exterior wall 102 along the suction side 112. Ensuring that the first portion 134 terminates along the terminal end surface 128 ensures that a sufficient volume of outlet cooling fluid (Cfo) is directed towards the tip plenum 124 and/or into the gap 174. If the first surface 186 were to end at the portion of the exterior wall 102 along the suction side 112, an insufficient amount of outlet cooling fluid (Cfo) to keep the gap 174 at a non-zero value or to effectively cool other portions of the airfoil 100 (e.g., the tip rail 122 or the tip plenum 124) would not be experienced.

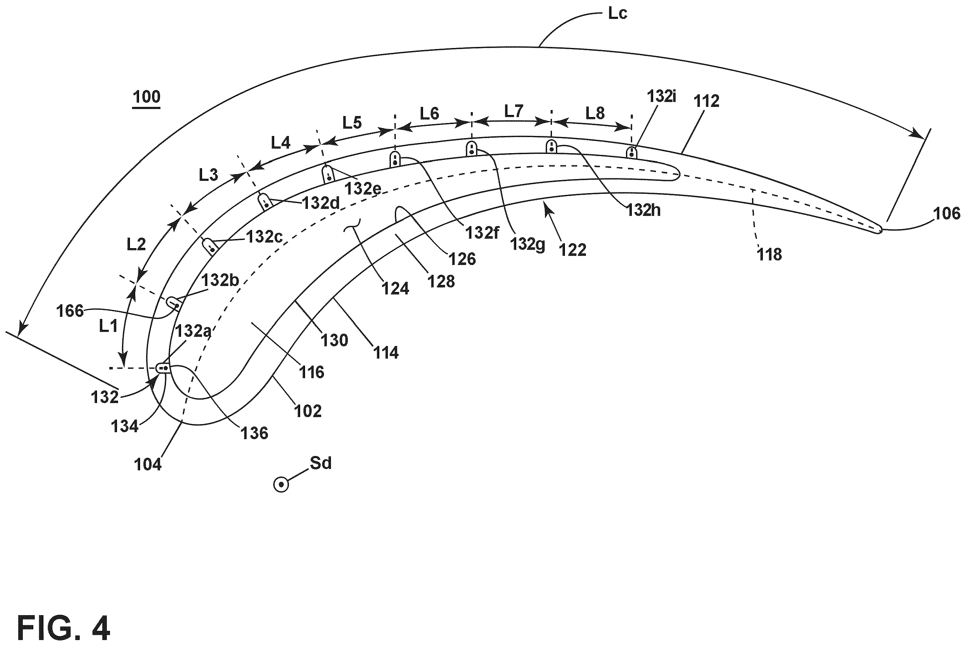

FIG. 4 is a top-down view of the airfoil 100 as seen from sight-line IV-IV of FIG. 2. The airfoil 100 extends a total camber length (Lc) axially along the mean camber line 118.

The set of cooling hole outlets 132 include any number of one or more outlets. As a non-limiting example, the set of cooling hole outlets 132 include a first cooling hole outlet 132a, a second cooling hole outlet 132b, a third cooling hole outlet 132c, a fourth cooling hole outlet 132d, a fifth cooling hole outlet 132e, a sixth cooling hole outlet 132f, a seventh cooling hole outlet 132g, an eighth cooling hole outlet 132h, and a ninth cooling hole outlet 132i in serial axial arrangement, with respect to the mean camber line 118. The first cooling hole outlet 132a is an outlet of the set of cooling hole outlets 132 that is located axially nearest the leading edge 104. The ninth cooling hole outlet 132i (e.g., a last cooling hole outlet) is an outlet of the set of cooling hole outlets 132 located axially nearest the trailing edge 106. The first cooling hole outlet 132a is spaced a first distance (L1) from the second cooling hole outlet 132b. The second cooling hole outlet 132b is spaced a second distance (L2) from the third cooling hole outlet 132c. The third cooling hole outlet 132c is spaced a third distance (L3) from the fourth cooling hole outlet 132d. The fourth cooling hole outlet 132d is spaced a fourth distance (L4) from the fifth cooling hole outlet 132e. The fifth cooling hole outlet 132e is spaced a fifth distance (L5) from the sixth cooling hole outlet 132f. The sixth cooling hole outlet 132f is spaced a sixth distance (L6) from the seventh cooling hole outlet 132g. The seventh cooling hole outlet 132g is spaced a seventh distance (L7) from the eighth cooling hole outlet 132h. The eighth cooling hole outlet 132h is spaced an eighth distance (L8) from the ninth cooling hole outlet 132i. The first through eighth distance (L1-8) will hereinafter be referred to as the set of distances.

Each distance of the set of distances can be equal. Alternatively, at least two distances for the set of distances can be non-equal. A summation of the set of distances located along a portion of the tip rail 122 corresponding to the suction side 112 of the airfoil 100 is greater than or equal to 15% and less than or equal to 90% of the total camber length (Lc). Put another way, the axial distance between the first cooling hole outlet 132a and the ninth cooling hole outlet 132i is greater than or equal to 15% and less than or equal to 90% of the total camber length (Lc). The first cooling hole outlet 132a being defined as an outlet of the set of cooling hole outlets 132 on a portion of the tip rail 122 corresponding to the suction side 112 that is nearest the leading edge 104. The ninth cooling hole outlet being defined as a last outlet of the set of cooling hole outlets 132 which is an outlet of the set of cooling hole outlets 132 axially nearest the trailing edge 106.

With reference to both FIGs. 3 and 4, the distance of the set of distances is further defined in relation to the radial width (D) of the covered portion 144. Specifically, each distance of the set of distances is greater than 0 times and less or equal to 10 times the radial width (D) of a respective outlet of the set of cooling hole outlets 132 from which the distance is measured. As a non-limiting example, a sizing of the first distance (L1) is greater than 0 times and less than or equal to 10 times the radial width (D) of either of the first cooling hole outlet 132a or the second cooling hole outlet 132b.

With reference to FIGs. 2-4, the airfoil 100 can be manufactured through various methods. As a non-limiting example, the airfoil 100 can be manufactured through casting. During casting, a casting core(s) is used to define internal structures of the airfoil 100. As such, the airfoil 100 can be defined as a cast airfoil. A material is then poured around the casting core(s) to define the solid portions of the airfoil 100 (e.g., the exterior wall 102 and the tip rail 122). The casting core(s) is then removed through various processes such as, but not limited to, leching, melting, burning, or the like. The spaces previously inhabited by the casting core(s) then define internal flow passages such as the fluid passage 138 , the set of cooling hole outlets 132, the set of cooling conduits 120 or a combination thereof. The casting core(s) are made of various materials. As a non-limiting example, the casting core(s) used to form the fluid passage 138 and the set of cooling hole outlets 132 can be a refractory metal. Alternatively, the fluid passage 138 and the set of cooling hole outlets 132 can be formed through a subtractive process where the solid material of the airfoil 100 is removed to form the fluid passage 138 and the set of cooling hole outlets 132. Alternatively, the airfoil 100 can be additively manufactured through various additive manufacturing processes that form the airfoil 100 with the fluid passage 138 and the set of cooling hole outlets 132 as a unitary body. It will be appreciated that the set of cooling hole outlets 132 can be machined into the airfoil 100 after the airfoil 100 is cast or otherwise formed. Machined, as used herein, refers to the use of tools (e.g., drills) to cut away or otherwise remove material from the airfoil 100. As such, the set of cooling hole outlets 132 can be defined as a set of machined cooling hole outlets.

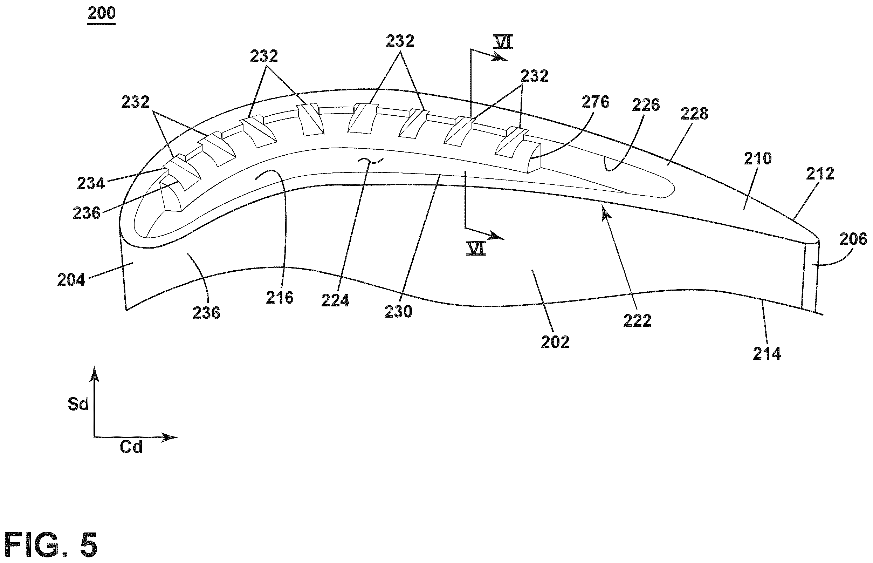

FIG. 5 is a schematic perspective view of an exemplary airfoil 200 suitable for use as the airfoil 100 of FIG. 2. The airfoil 200 is similar to the airfoil 100; therefore, like parts will be identified with like numerals increased to the 200 series with it being understood that the description of the airfoil 100 applies to the airfoil 200 unless noted otherwise.

The airfoil 200 includes an exterior wall 202. The exterior wall 202 extends between a leading edge 204 and a trailing edge 206 in a chordwise direction (Cd). The airfoil 200 includes a mean camber line 218. The exterior wall 202 extends between a root (e.g., the root 108 of FIG. 2) and a tip 210 in a spanwise direction (Sd). The exterior wall 202 defines a suction side 214 and a pressure side 212. The airfoil 200 includes a tip end wall 216 and a tip rail 222. The tip rail 222 has a side surface 226, and a terminal end surface 228. The side surface 226 meets the terminal end surface 228 at a tip rail edge 230. The tip rail 222 defines a tip plenum 224. The airfoil includes a set of cooling hole outlets 232 located along the tip rail 222. Each cooling hole outlet of the set of cooling hole outlets 232 includes a first portion 234 and a second portion 236.

The set of cooling hole outlets 232 are similar to the set of cooling hole outlets 132 (FIG. 2) in that each cooling hole outlet of the set of cooling hole outlets 232 includes the first portion 234 and the second portion 236 extending from the first portion 234 and extending across the tip rail edge 230. The difference between the airfoil 100 and the airfoil 200 lies where the airfoil 200 includes a protuberance 276 with at least a portion of each cooling hole outlet of the set of cooling hole outlets 232 opening through the protuberance 276. The protuberance 276 extends from the side surface 226 and into the tip plenum 224. As such, at least a portion of the second portion 236 extends along the protuberance 276.

The protuberance 276 defines a portion of the tip rail 222 extending from the side surface 226 and into the tip plenum 224. The side surface 226 faces the tip plenum 224. It will be appreciated that the protuberance 276 forms a non-continuous surface with respect to the side surface 226. As a non-limiting example, the side surface 126 of FIG. 2 defines a continuous side surface 126. The protuberance 276 and the tip rail 222 can be integrally formed as a unitary body. Alternatively, the tip rail 222 and the protuberance 276 can be separately formed such that the protuberance 276 is coupled to the side surface 226 of the tip rail 222.

The protuberance 276, as illustrated, can terminate prior to the terminal end surface 228 in the spanwise direction (Sd). In such a case, the tip rail edge 230 is where the side surface 226 meets the terminal end surface 228 along an entirety of the tip rail 222. Alternatively, the protuberance 276 can extend to the terminal end surface 228 in the spanwise direction (Sd).

With relation to the tip rail 122 (FIG. 2), the tip rail 222 formed with the protuberance 276 has a larger available surface area for the set of cooling hole outlets 232 to breakout on. Specifically, the protuberance 276 increases the surface area of the tip rail 222 available for the set of cooling hole outlets 232 to be formed along, which in turn can increase the size of the set of cooling hole outlets 232 in relation to the size of the set of cooling hole outlets 132 (FIG. 2). Increasing the overall size of the set of cooling hole outlets 232 increases a volumetric flow rate of an outlet cooling fluid exiting the set of cooling hole outlets 232. Increasing the volumetric flow rate of an outlet cooling fluid exiting the set of cooling hole outlets 232 helps increase the cooling efficiency and creation of the gap (e.g., the gap 174 of FIG. 3) as described herein.

The use of the protuberance 276 further allows for additional angles (e.g., the first included angle 154 of FIG. 3, or the second included angle 156 of FIG. 3) of the first surface 286 and the second surface 288 in relation to the cooling hole outlet 132 of FIG. 3. Specifically, larger angles can be selected in order to affect the volume of, pressure of, and/or velocity of the outlet cooling fluid (e.g., the outlet cooling fluid (Cfo) of FIG. 3). The use of the protuberance 276 can further decrease a manufacturing burden of the airfoil 100 by providing line of sight for machining access or a benefit to additive manufacturing producibility.

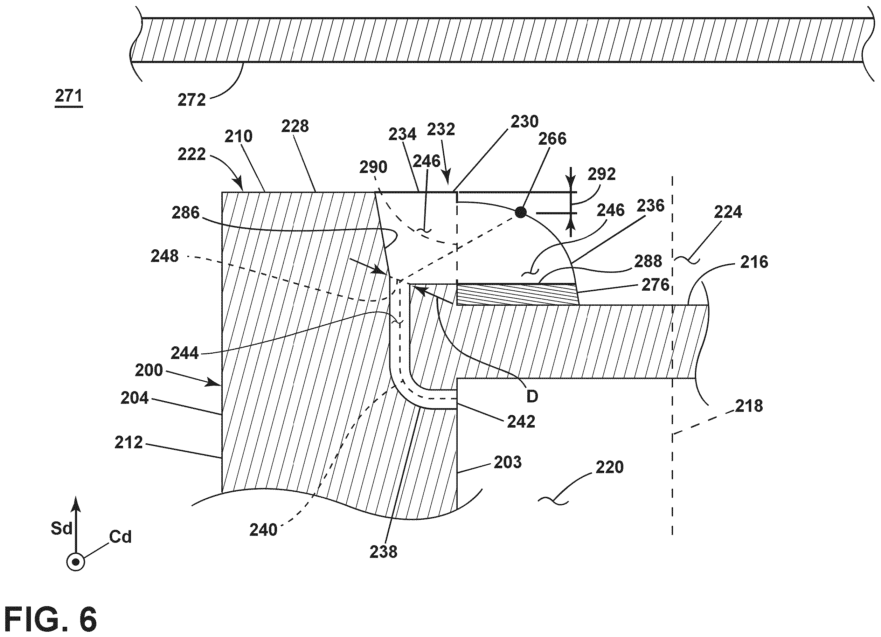

FIG. 6 is a schematic cross-sectional view of a portion of the airfoil 200 as seen from sectional line VI-VI of FIG. 5. The protuberance 276 extends from a remainder 290 of the side surface 226. For purposes of illustration, the remainder 290 of the side surface 226 is shown in phantom lines. The remainder of the side surface 226 is defined by a virtual plane extending along the side surface 226 of the tip rail 222.

The airfoil 200 includes an interior 203, a set of cooling conduits 220, and a fluid passage 238 exhausting from the interior 203. The fluid passage 238 includes a passage centerline 240. The fluid passage 238 extends between an inlet 242 and at least one outlet of the set of cooling hole outlets 232. The fluid passage 238 includes a covered portion 244 and an uncovered portion 246. The covered portion 244 is located at a transition 248 to the uncovered portion 246. The covered portion 244 has a radial width (D). The passage centerline 240 intersects the cooling hole outlet 232 at a midpoint 266.

The midpoint 266 is located a spanwise distance 292 from the tip rail edge 230. The spanwise distance 292 is defined as a maximum straight-line distance between the midpoint 266 and the tip rail edge 230 in the spanwise direction (Sd). The spanwise distance 292 is quantified in relation to the radial width (D). Specifically, the spanwise distance 292 is greater than or equal to 0 times and less than or equal to 3 times that radial width (D). When the spanwise distance 292 is 0 times the radial width (D), the spanwise distance 292 is zero and the midpoint 266 is positioned to be aligned with the terminal end surface 228 like the midpoint 166 of FIG. 3.

It is contemplated that keeping the midpoint 266 near the terminal end surface 228 ensures that a sufficient flow of outlet cooling fluid (e.g., the outlet cooling fluid (Cfo) of FIG. 3) exits the cooling hole outlet 232 in a desired location (e.g., the flow of outlet cooling fluid is centered around the midpoint 266). Specifically, positioning the midpoint 266 with the spanwise distance 292 in the aforementioned range ensures that a sufficient flow of outlet cooling fluid is exhausted into the gap (e.g., the gap 174 of FIG. 3) to keep the gap at a non-zero value and effectively distribute the outlet cooling fluid along the tip 210 and respective portions of the exterior wall 202.

As described herein, the benefits of the present disclosure include an airfoil with increased cooling efficiency when compared to an airfoil formed without the set of cooling hole outlets. The set of cooling hole outlets are used to direct some cooling air along a respective portion of the tip surfaces and exterior wall. The location of the cooling passages within the airfoil interior and direction of the cooling air along the respective portion of the exterior wall increases cooling efficiency of the airfoil. The set of cooling hole outlets aid in maintaining a non-zero gap between the tip of the airfoil and an opposing engine component, thus mitigating or eliminating the possibility of the airfoil and the engine component touching, while also ensuring that cooling fluid can be distributed along the tip rail, within the tip plenum and along portions of the exterior wall along the suction side.

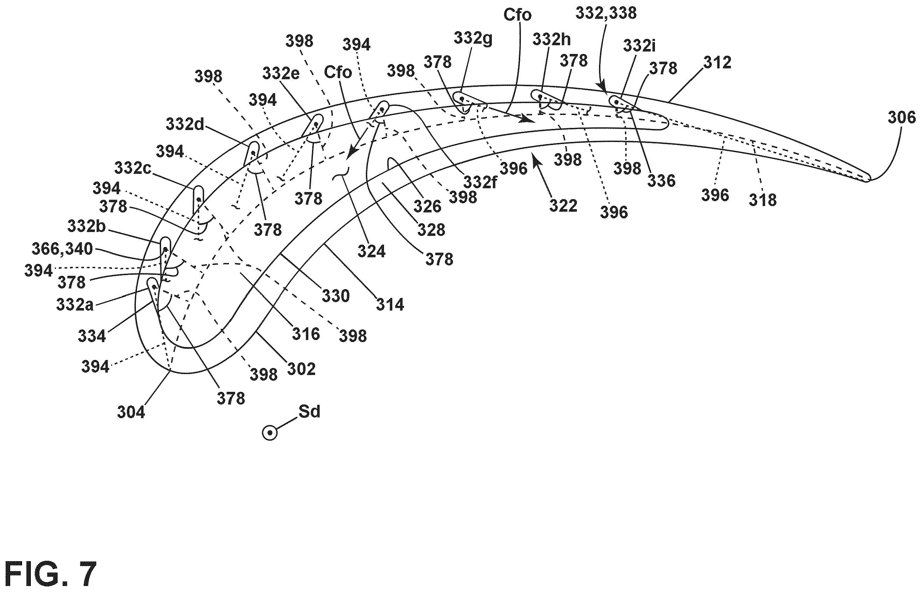

FIG. 7 is a schematic top-down view of an exemplary airfoil 300 suitable for use as the airfoil 100 of FIG. 2 The airfoil 300 is similar to the airfoil 100, 200 (FIG. 5); therefore, like parts will be identified with like numerals increased to the 300 series with it being understood that the description of the airfoil 100, 200 applies to the airfoil 300 unless noted otherwise.

The airfoil 300 includes an exterior wall 302. The exterior wall 302 extends between a leading edge 304 and a trailing edge 306 in a chordwise direction (e.g., the chordwise direction (Cd) of FIG. 2). The airfoil 300 includes a mean camber line 318. The exterior wall 302 extends between a root (e.g., the root 108 of FIG. 3) and a tip 310 in a spanwise direction (Sd). The exterior wall 302 defines a suction side 314 and a pressure side 312. The airfoil 300 includes a tip end wall 316 and a tip rail 322. The tip rail 322 has a side surface 326, and a terminal end surface 328. The side surface 326 meets the terminal end surface 328 at a tip rail edge 330. The tip rail 322 defines a tip plenum 324. The airfoil includes a set of cooling hole outlets 332 located along the tip rail 322. Each cooling hole outlet of the set of cooling hole outlets 332 includes a first portion 334 and a second portion 336. It will be appreciated that the second portion 336 extend along a receptive portion of the side surface 326 in the spanwise direction (Sd). The set of cooling hole outlets 332 include any number of one or more cooling hole outlets. As a non-limiting example, the set of cooling hole outlets 332 include a first cooling hole outlet 332a, a second cooling hole outlet 332b, a third cooling hole outlet 332c, a fourth cooling hole outlet 332d, a fifth cooling hole outlet 332e, a sixth cooling hole outlet 332f, a seventh cooling hole outlet 332g, an eighth cooling hole outlet 332h, and a ninth cooling hole outlet 332i in serial axial arrangement, with respect to the camber line 318.

The set of cooling hole outlets 332 are similar to the set of cooling hole outlets 132 (FIG. 2), 232 (FIG. 5) in that the set of cooling hole outlets 332 define terminations of or otherwise outlets of a set of fluid passages 338. Each fluid passage of the set of fluid passages 338 include a passage centerline 340 that intersects a respective cooling hole outlet of the set of cooling hole outlets 332 at a midpoint 366.

The set of cooling hole outlets 332 are defined by their orientation with respect to the leading edge 304 and the trailing edge 306. Specifically, at least one cooling hole outlet of the set of cooling hole outlets 332 can be oriented towards one of the leading edge 304 or the trailing edge 306. As used herein, the orientation of each cooling hole outlet of the set of cooling hole outlets 332 is determined by an outlet cooling fluid (Cfo) exhausted form the respective cooling hole outlet.

If a respective cooling hole outlet of the set of cooling hole outlets 332 exhausts the outlet cooling fluid (Cfo) axially towards the leading edge 304, with respect to the mean camber line 318, the respective cooling hole outlet is said to be oriented towards the leading edge 304. As a non-limiting example, the sixth cooling hole outlet 332f is shown to exhaust the outlet cooling fluid (Cfo) axially towards the leading edge 304; therefore, the sixth cooling hole outlet 332f is oriented towards the leading edge 304. It will be appreciated that any number of cooling hole outlets of the set of cooling hole outlets 332, including zero cooling hole outlets, can be oriented towards the leading edge 304. As a non-limiting example, the first-sixth cooling hole outlets 332a-f are illustrated as being oriented towards the leading edge 304.

If a respective cooling hole outlet of the set of cooling hole outlets 332 exhausts the outlet cooling fluid (Cfo) axially towards the trailing edge 306, with respect to the mean camber line 318, the receptive cooling hole outlet is said to be oriented towards the trailing edge 306. As a non-limiting example, the seventh cooling hole outlet 332g is shown to exhaust the outlet cooling fluid (Cfo) axially towards the trailing edge 306; therefore, the seventh cooling hole outlet 332g is oriented towards the trailing edge 306. It will be appreciated that any number of cooling hole outlets of the set of cooling hole outlets 332, including zero cooling hole outlets, can be oriented towards the trailing edge 306. As a non-limiting example, the seventh-ninth cooling hole outlets 332g-i are illustrated as being oriented towards the trailing edge 306.

Each cooling hole outlet of the set of cooling hole outlets 332 is oriented at a cooling hole outlet angle 378. The cooling hole outlet angle 378 is an included angle formed between a radial line 398 intersecting the midpoint 366 of a respective cooling hole outlet, and one of either a leading edge reference line 394 or a trailing edge reference line 396 intersecting the midpoint 366 of the respective cooling hole outlet. The radial line 398 extends radially with respect to the mean camber line 318 from the midpoint 366 of a respective cooling hole outlet and to a nearest point along the mean camber line 318. The leading edge reference line 394 and the trailing edge reference line 396 are straight-lines originating from the leading edge 304 and the trailing edge 306, respectively, and intersecting the midpoint 366 of a respective cooling hole outlet of the set of cooling hole outlets 332. For cooling hole outlets of the set of cooling hole outlets 332 oriented towards the leading edge 304, the cooling hole outlet angle 378 is formed between the radial line 398 and the leading edge reference line 394. For cooling hole outlets of the set of cooling hole outlets 332 oriented towards the trailing edge 306, the cooling hole outlet angle 378 is formed between the radial line 398 and the trailing edge reference line 396. The cooling hole outlet angle 378 has an absolute value of greater than or equal to 0 degrees and less than or equal to 75 degrees. When oriented towards the leading edge 304 or the trailing edge 306, the cooling hole outlet angle 378 has an absolute value of greater than 0 degrees and less than or equal to 75 degrees. As a non-limiting example, when oriented towards the leading edge 304 or the trailing edge 306, the cooling hole outlet angle 378 can have an absolute value of greater than 0 degrees and less than or equal to 60 degrees.

While described in terms of being oriented towards one of either the leading edge 304 or the trailing edge 306, it will be appreciated that at least one cooling hole outlet of the set of cooling hole outlets 332 can be oriented towards neither of the leading edge 304 or the trailing edge 306. Put another way, at least one cooling hole outlet of the set of cooling hole outlets 332 can have a respective cooling hole outlet angle 378 that is zero degrees such that the outlet cooling fluid (Cfo) is exhausted radially towards the mean camber line 318 into the tip plenum 324.

It will be appreciated that the cooling hole outlet angle 378 can remain constant between cooling hole outlets of the set of cooling hole outlets 332. Alternatively, two or more cooling hole outlets of the set of cooling hole outlets 332 can have a non-equal cooling hole outlet angle 378. It is contemplated that the size of the cooling hole outlet angle 378 can be varied based on the axial location of each cooling hole outlet of the set of cooling hole outlets 332 with respect to the mean camber line 318. As a non-limiting example, the cooling hole outlets of the set of cooling holes outlets 332 having the midpoint 366 located axially between greater than or equal to 0% and less than 50% of the mean camber line 318, with 0% corresponding to the leading edge 304, can have the cooling hole outlet angle 378 that orients the cooling hole outlet towards the leading edge 304. As a non-limiting example, the cooling hole outlets of the set of cooling holes outlets 332 having the midpoint 366 located axially between greater than 50% and less than or equal to 100% of the mean camber line 318, with 100% corresponding to the trailing edge 306, can have the cooling hole outlet angle 378 that orients the cooling hole outlet towards the trailing edge 306. As a non-limiting example, a cooling hole outlet of the set of cooling hole outlets 332 having the midpoint 366 located at 50% of the mean camber line can have a cooling hole outlet angle 378 of zero degrees. It is contemplated that the cooling hole outlet angle 378 can serially decrease between 0% and 50%, and then serially increase between 50% and 100% of the mean camber line 318. Put another way, if the fifth cooling hole outlet 332e is located at 50% of the mean camber line 318, the cooling hole outlet angle 378 of the first-fourth cooling hole outlet 332a-d would serially decrease from the cooling hole outlet angle 378 of the first cooling hole outlet 332a and to the cooling hole outlet angle 378 of the fourth cooling hole outlet 332d. The cooling hole outlet angle 378 of the sixth-ninth cooling hole outlet 332g-i would serially increase from the cooling hole outlet angle 378 of the sixth cooling hole outlet 332f and to the cooling hole outlet angle 378 of the ninth cooling hole outlet 332i.

The benefit of orienting at least a portion of the set of cooling hole outlets 332 towards at least one of the leading edge 304 or the trailing edge 306 is an increased cooling efficiency in comparison to each cooling hole outlet of the set of cooling hole outlets 332 having a 0 degree cooling hole outlet angle 378. Specifically, orienting at least a portion of the set of cooling hole outlets 332 towards at least one of the leading edge 304 or the trailing edge 306 directs at least a portion of the outlet cooling fluid (Cfo) being exhausted from the set of cooling hole outlets 332 towards the leading edge 304 or the trailing edge 306. As such, a portion of the outlet cooling fluid (Cfo) will flow towards, and in some cases to, the leading edge 304 or the trailing edge 306. This direction of the outlet cooling fluid (Cfo) towards or to the leading edge 304 or the trailing edge 306 increases the axial spread of the outlet cooling fluid (Cfo), with respect to the mean camber line 318 in comparison to an axial spread of the outlet cooling fluid (Cfo) of the airfoil 300 including each cooling hole outlet of the set of cooling hole outlets 332 having a 0 degree cooling hole outlet angle 378. Increasing the axial spread of the outlet cooling fluid (Cfo) increases or targets the total surface area of the airfoil 300 that comes into contact with the outlet cooling fluid (Cfo); thereby, increasing the overall cooling efficiency associated with the use of the set of cooling hole outlets 332.

It should be appreciated that application of the disclosed design is not limited to turbine engines with fan and booster sections, but is applicable to turbojets and turbo engines as well. It should also be appreciated that the cooling circuit as described herein can be provided in any portion of an airfoil or engine component. Furthermore, the cooling hole geometry can have applicability in other engine components, beyond that of an airfoil, such as in a blade, a vane, a shroud, or a combustor liner in non-limiting examples.

To the extent not already described, the different features and structures of the various aspects can be used in combination, or in substitution with each other as desired. That one feature is not illustrated in all of the examples is not meant to be construed that it cannot be so illustrated, but is done for brevity of description. Thus, the various features of the different aspects can be mixed and matched as desired to form new aspects, whether or not the new aspects are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:
An airfoil for a turbine engine, the airfoil comprising an exterior wall bounding an interior, the exterior wall extending between a leading edge and a trailing edge in a chordwise direction, and between a root and a tip in a spanwise direction, the tip being at least partially defined by a tip end wall a set of cooling conduits located within the interior, and a tip rail extending in the spanwise direction from the tip end wall and at least partially forming a tip plenum with the tip end wall, the tip rail having a side surface facing the tip plenum, a terminal end surface forming a tip rail edge with the side surface, the tip rail forming a portion of the exterior wall, wherein the side surface, the terminal end surface, and the tip rail edge define a cooling hole outlet opening therethrough, the cooling hole outlet being fluidly coupled to the set of cooling conduits, the cooling hole outlet having a first portion and a second portion, the first portion being located along the terminal end surface and terminating prior to the exterior wall, the second portion being located along the side surface and terminating prior to the tip end wall.

The airfoil of any preceding clause, wherein the cooling hole outlet is included in a plurality of cooling hole outlets spaced along the tip rail in the chordwise direction.

The airfoil of any preceding clause, wherein the exterior wall defines a suction side and a pressure side, the plurality of cooling hole outlets being located along a side of the tip rail corresponding to the suction side.

The airfoil of any preceding clause, wherein the airfoil includes a mean camber line extending a total camber length, and each cooling hole outlet of the plurality of cooling hole outlets includes a midpoint, the plurality of cooling hole outlets including a first cooling hole outlet defined as a cooling hole outlet located axially nearest the leading edge, and a last cooling hole outlet defined as a cooling hole outlet located axially nearest the trailing edge, with the midpoint of the first cooling hole outlet being spaced axially a total distance from the midpoint of the last cooling hole outlet, with respect to the mean camber line, and the total distance is greater than or equal to 15% and less than or equal to 90% of the total camber length.

The airfoil of any preceding clause, wherein the first portion has a first cross-sectional area, and the second portion has a second cross-sectional area that is less than the second cross-sectional area.

The airfoil of any preceding clause, wherein the first portion has a first cross-sectional area, and the second portion has a second cross-sectional area that is greater than or equal to 50% and less than or equal to 150% of the first cross-sectional area.

The airfoil of any preceding clause, wherein the cooling hole outlet is oriented towards one of the leading edge or the trailing edge.

The airfoil of any preceding clause, wherein the cooling hole outlet is oriented towards the leading edge, the cooling hole outlet having a cooling hole outlet angle formed between a leading edge reference line and a radial line, with respect to the mean camber line, the cooling hole outlet angle having an absolute value being greater than 0 degrees and less than or equal to 75 degrees.

The airfoil of any preceding clause, wherein the cooling hole outlet is oriented towards the trailing edge, the cooling hole outlet having a cooling hole outlet angle formed between a trailing edge reference line and a radial line, with respect to the mean camber line, the cooling hole outlet angle having an absolute value being greater than 0 degrees and less than or equal to 75 degrees.

The airfoil of any preceding clause, wherein the cooling hole outlet angle has an absolute value that is less than or equal to 60 degrees.

The airfoil of any preceding clause, wherein the cooling hole outlet is included in a plurality of cooling hole outlets, with each cooling hole outlet of eth plurality of cooling hole outlets having a cooling hole outlet angle.

The airfoil of any preceding clause, wherein the cooling hole outlets of the plurality of cooling hole outlets having a midpoint located axially between greater than or equal to 0% and less than 50% of the mean camber line, with 0% corresponding to the leading edge, are oriented towards the leading edge.

The airfoil of any preceding clause, wherein the cooling hole outlet angle serially decreases axially between 0% and 50% of the mean camber line.

The airfoil of any preceding clause, wherein the cooling hole outlets of the plurality of cooling hole outlets having a midpoint located axially between greater than 50% and less than or equal to 100% of the mean camber line, with 100% corresponding to the trailing edge, are oriented towards the trailing edge.

The airfoil of any preceding clause, wherein the cooling hole outlet angle serially increases axially between 50% and 100% of the mean camber line.

The airfoil of any preceding clause, wherein the cooling hole outlet angle of a cooling hole outlet of the plurality of cooling hole outlets having a midpoint located axially at 50% of the mean camber line is equal to 0 degrees.

The airfoil of any preceding clause, wherein the first portion has a first cross-sectional area, and the second portion has a second cross-sectional area, with the first cross-sectional area and the second cross-section area have a respective shape being formed as one of an ellipse, a racetrack, a circle, or a polygon.

The airfoil of any preceding clause, wherein the respective shape of the first portion differs from the respective shape of the second portion.

The airfoil of any preceding clause, wherein the first portion has a first hydraulic diameter, the second portion has a second hydraulic diameter, and a summation of the first hydraulic diameter and the second hydraulic diameter is greater than or equal to 0.003 inches and less than or equal to 0.12 inches.

The airfoil of any preceding clause, further comprising a fluid passage that opens at the cooling hole outlet, wherein the fluid passage has a passage centerline intersecting the cooling hole outlet at a midpoint, a covered portion having a radial width with respect to the passage centerline, and a uncovered portion extending between the covered portion and the cooling hole outlet.

The airfoil of any preceding clause, wherein the passage centerline intersects the cooling hole outlet at a midpoint that is located a spanwise distance from the terminal end surface in the spanwise direction greater than or equal to 3 times the radial width and less than or equal to 10 times the radial width.

The airfoil of any preceding clause, wherein the passage centerline intersects the cooling hole outlet at a midpoint that is located a radial distance from the terminal end surface, with respect to the passage centerline, the radial distance being greater than or equal to 0.25 times the radial width and less than or equal to 6 times the radial width.

The airfoil of any preceding clause, wherein the cooling hole outlet is included in a plurality of cooling hole outlets, with the midpoints of two adjacent cooling hole outlets of the set of cooling hole outlets in the chordwise direction being spaced a distance apart, the distance being greater than 0 times and less than or equal to 10 times the radial width.

The airfoil of any preceding clause, wherein the uncovered portion has a first surface terminating at the terminal end surface and a second surface terminating at the side surface.

The airfoil of any preceding clause, wherein a first included angle is formed between the first surface and a first reference line extending the spanwise direction from the covered portion, the first included angle being greater than or equal to -15 degrees and less than or equal to 25 degrees.

The airfoil of any preceding clause, wherein a second included angle is formed between the second surface and a second reference line extending the spanwise direction from the covered portion, the second included angle being greater than or equal to 50 degrees and less than or equal to 120 degrees.

The airfoil of any preceding clause, wherein the tip rail includes a protuberance extending into the tip plenum from the side surface, the cooling hole outlet opening through the protuberance.

The airfoil of any preceding clause, wherein the airfoil is a cast airfoil and the cooling hole outlet is formed through use of a casting core.

The airfoil of any preceding clause, wherein the casting core is one of a ceramic casting core, or a refractory metal casting core.

The airfoil of any preceding clause, wherein the casting core is a single, continuous casting core that defines the cooling hole outlet and at least a portion of the set of cooling conduits.

The airfoil of any preceding clause, wherein the cooling hole outlet is machined cooling hole outlet.

The airfoil of any preceding clause, wherein the first portion has a first hydraulic diameter and the second portion has a second hydraulic diameter, with the first hydraulic diameter being greater than or equal to 50% and less than or equal to 150% of the second hydraulic diameter.

The airfoil of any preceding clause, wherein the turbine engine comprises a casing, with the terminal end surface confronting and being spaced from the engine casing to define a gap therebetween, with the cooling hole outlet opening into the gap.

A turbine engine comprising a compression section, a combustion section, and a turbine section in serial flow arrangement, and an airfoil located within the turbine section, the airfoil comprising an exterior wall bounding an interior, the exterior wall extending between a leading edge and a trailing edge in a chordwise direction, and between a root and a tip in a spanwise direction, the tip being at least partially defined by a tip end wall a set of cooling conduits located within the interior, and a tip rail extending in the spanwise direction from the tip end wall and at least partially forming a tip plenum with the tip end wall, the tip rail having a side surface facing the tip plenum, a terminal end surface forming a tip rail edge with the side surface, the tip rail forming a portion of the exterior wall, wherein the side surface, the terminal end surface, and the tip rail edge define a cooling hole outlet opening therethrough, the cooling hole outlet being fluidly coupled to the set of cooling conduits, the cooling hole outlet having a first portion and a second portion, the first portion being located along the terminal end surface and terminating prior to the exterior wall, the second portion being located along the side surface and terminating prior to the tip end wall.

The turbine engine of any preceding clause, wherein the cooling hole outlet is included in a plurality of cooling hole outlets spaced along the tip rail in the chordwise direction.

The turbine engine of any preceding clause, wherein the exterior wall defines a suction side and a pressure side, the plurality of cooling hole outlets being located along a side of the tip rail corresponding to the suction side.

The turbine engine of any preceding clause, wherein the airfoil includes a mean camber line extending a total camber length, and each cooling hole outlet of the plurality of cooling hole outlets includes a midpoint, the plurality of cooling hole outlets including a first cooling hole outlet defined as a cooling hole outlet located axially nearest the leading edge, and a last cooling hole outlet defined as a cooling hole outlet located axially nearest the trailing edge, with the midpoint of the first cooling hole outlet being spaced axially a total distance from the midpoint of the last cooling hole outlet, with respect to the mean camber line, and the total distance is greater than or equal to 15% and less than or equal to 90% of the total camber length.

The turbine engine of any preceding clause, wherein the first portion has a first cross-sectional area, and the second portion has a second cross-sectional area that is less than the second cross-sectional area.

The turbine engine of any preceding clause, wherein the first portion has a first cross-sectional area, and the second portion has a second cross-sectional area that is greater than or equal to 50% and less than or equal to 150% of the first cross-sectional area.

The turbine engine of any preceding clause, wherein the cooling hole outlet is oriented towards one of the leading edge or the trailing edge.

The turbine engine of any preceding clause, wherein the cooling hole outlet is oriented towards the leading edge, the cooling hole outlet having a cooling hole outlet angle formed between a leading edge reference line and a radial line, with respect to the mean camber line, the cooling hole outlet angle having an absolute value being greater than 0 degrees and less than or equal to 75 degrees.

The turbine engine of any preceding clause, wherein the cooling hole outlet is oriented towards the trailing edge, the cooling hole outlet having a cooling hole outlet angle formed between a trailing edge reference line and a radial line, with respect to the mean camber line, the cooling hole outlet angle having an absolute value being greater than 0 degrees and less than or equal to 75 degrees.

The turbine engine of any preceding clause, wherein the cooling hole outlet angle has an absolute value that is less than or equal to 60 degrees.

The turbine engine of any preceding clause, wherein the cooling hole outlet is included in a plurality of cooling hole outlets, with each cooling hole outlet of eth plurality of cooling hole outlets having a cooling hole outlet angle.

The turbine engine of any preceding clause, wherein the cooling hole outlets of the plurality of cooling hole outlets having a midpoint located axially between greater than or equal to 0% and less than 50% of the mean camber line, with 0% corresponding to the leading edge, are oriented towards the leading edge.

The turbine engine of any preceding clause, wherein the cooling hole outlet angle serially decreases axially between 0% and 50% of the mean camber line.

The turbine engine of any preceding clause, wherein the cooling hole outlets of the plurality of cooling hole outlets having a midpoint located axially between greater than 50% and less than or equal to 100% of the mean camber line, with 100% corresponding to the trailing edge, are oriented towards the trailing edge.

The turbine engine of any preceding clause, wherein the cooling hole outlet angle serially increases axially between 50% and 100% of the mean camber line.

The turbine engine of any preceding clause, wherein the cooling hole outlet angle of a cooling hole outlet of the plurality of cooling hole outlets having a midpoint located axially at 50% of the mean camber line is equal to 0 degrees.

The turbine engine of any preceding clause, wherein the first portion has a first cross-sectional area, and the second portion has a second cross-sectional area, with the first cross-sectional area and the second cross-section area have a respective shape being formed as one of an ellipse, a racetrack, a circle, or a polygon.

The turbine engine of any preceding clause, wherein the respective shape of the first portion differs from the respective shape of the second portion.

The turbine engine of any preceding clause, wherein the first portion has a first hydraulic diameter, the second portion has a second hydraulic diameter, and a summation of the first hydraulic diameter and the second hydraulic diameter is greater than or equal to 0.003 inches and less than or equal to 0.12 inches.

The turbine engine of any preceding clause, further comprising a fluid passage that opens at the cooling hole outlet, wherein the fluid passage has a passage centerline intersecting the cooling hole outlet at a midpoint, a covered portion having a radial width with respect to the passage centerline, and a uncovered portion extending between the covered portion and the cooling hole outlet.

The turbine engine of any preceding clause, wherein the passage centerline intersects the cooling hole outlet at a midpoint that is located a spanwise distance from the terminal end surface in the spanwise direction greater than or equal to 3 times the radial width of the covered portion and less than or equal to 10 times the radial width of the covered portion.

The turbine engine of any preceding clause, wherein the passage centerline intersects the cooling hole outlet at a midpoint that is located a radial distance from the terminal end surface, with respect to the passage centerline, the radial distance being greater than or equal to 0.25 times the radial width of the covered portion and less than or equal to 6 times the radial width of the covered portion.

The turbine engine of any preceding clause, wherein the cooling hole outlet is included in a plurality of cooling hole outlets, with the midpoints of two adjacent cooling hole outlets of the set of cooling hole outlets in the chordwise direction being spaced a distance apart, the distance being greater than 0 times and less than or equal to 10 times the radial width of the covered portion.

The turbine engine of any preceding clause, wherein the uncovered portion has a first surface terminating at the terminal end surface and a second surface terminating at the side surface.

The turbine engine of any preceding clause, wherein a first included angle is formed between the first surface and a first reference line extending the spanwise direction from the covered portion, the first included angle being greater than or equal to -15 degrees and less than or equal to 25 degrees.

The turbine engine of any preceding clause, wherein a second included angle is formed between the second surface and a second reference line extending the spanwise direction from the covered portion, the second included angle being greater than or equal to 50 degrees and less than or equal to 120 degrees.

The turbine engine of any preceding clause, wherein the tip rail includes a protuberance extending into the tip plenum from the side surface, the cooling hole outlet opening through the protuberance.

The turbine engine of any preceding clause, wherein the airfoil is a cast airfoil, and the cooling hole outlet is formed through use of a casting core.

The turbine engine of any preceding clause, wherein the casting core is one of a ceramic casting core, or a refractory metal casting core.

The turbine engine of any preceding clause, wherein the casting core is a single, continuous casting core that defines the cooling hole outlet and at least a portion of the set of cooling conduits.

The turbine engine of any preceding clause, wherein the cooling hole outlet is a machined cooling hole outlet.

The turbine engine of any preceding clause, wherein the first portion has a first hydraulic diameter and the second portion has a second hydraulic diameter, with the first hydraulic diameter being greater than or equal to 50% and less than or equal to 150% of the second hydraulic diameter.

The turbine engine of any preceding clause, wherein the turbine engine comprises a casing, with the terminal end surface confronting and being spaced from the engine casing to define a gap therebetween, with the cooling hole outlet opening into the gap.

The airfoil of any preceding clause, wherein the first portion has a first cross-sectional area, and the second portion has a second cross-sectional area that is less than the first cross-sectional area.

The airfoil of any preceding clause, wherein the cooling hole outlet is oriented towards one of the leading edge or the trailing edge.

The airfoil of any preceding clause, wherein the passage centerline intersects the cooling hole outlet at a midpoint that is located a spanwise distance from the terminal end surface in the spanwise direction greater than or equal to 3 times the radial width of the covered portion and less than or equal to 10 times the radial width of the covered portion.

The airfoil of any preceding clause, wherein the passage centerline intersects the cooling hole outlet at a midpoint that is located a radial distance from the terminal end surface, with respect to the passage centerline, the radial distance being greater than or equal to 0.25 times the radial width of the covered portion and less than or equal to 6 times the radial width of the covered portion.

The airfoil of any preceding clause, wherein the cooling hole outlet is included in a plurality of cooling hole outlets, with the midpoints of two adjacent cooling hole outlets of the set of cooling hole outlets in the chordwise direction being spaced a distance apart, the distance being greater than 0 times and less than or equal to 10 times the radial width of the covered portion.

## Claims

1. An airfoil (100, 200, 300) for a turbine engine (10), the airfoil (100, 200, 300) comprising:
an exterior wall (102, 202, 302) bounding an interior (103, 203), the exterior wall (102, 202, 302) extending between a leading edge (104, 204, 304) and a trailing edge (106, 206, 306) in a chordwise direction (Cd), and between a root (108, 208) and a tip (110, 210, 310) in a spanwise direction (Sd), the tip (110, 210, 310) being at least partially defined by a tip end wall (116, 216, 316);
a set of cooling conduits (120, 220) located within the interior (103, 203); and
a tip rail (122, 222, 322) extending in the spanwise direction (Sd) from the tip end wall (116, 216, 316) and at least partially forming a tip plenum (124, 224, 324) with the tip end wall (116, 216, 316), the tip rail (122, 222, 322) having a side surface (126, 226, 326) facing the tip plenum (124, 224, 324), a terminal end surface (128, 228, 328) forming a tip rail edge (130, 230, 330) with the side surface (126, 226, 326), the tip rail (122, 222, 322) forming a portion of the exterior wall (102, 202, 302); and
wherein the side surface (126, 226, 326), terminal end surface (128, 228, 328), and tip rail edge (130, 230, 330) define a a cooling hole outlet (132, 232, 332) therethrough through and the cooling hole outlet (132, 232, 332) being fluidly coupled to the set of cooling conduits (120, 220), the cooling hole outlet (132, 232, 332) having a first portion (134, 234, 334) and a second portion (136, 236, 336), the first portion (134, 234, 334) being located along the terminal end surface (128, 228, 328) and terminating prior to the exterior wall (102, 202, 302), the second portion (136, 236, 336) being located along the side surface (126, 226, 326) and terminating prior to the tip end wall (116, 216, 316).

2. The airfoil (100, 200, 300) of claim 1, wherein:
the cooling hole outlet (132, 232, 332) is included in a plurality of cooling hole outlets (132, 232, 332) spaced along the tip rail (122, 222, 322) in the chordwise direction (Cd); and
the exterior wall (102, 202, 302) defines a suction side and a pressure side, the plurality of cooling hole outlets (132, 232, 332) being located along a side of the tip rail (122, 222, 322) corresponding to the suction side.

3. The airfoil (100, 200, 300) of any of claims 1-2, wherein:
the cooling hole outlet (132, 232, 332) is included in a plurality of cooling hole outlets (132, 232, 332) spaced along the tip rail (122, 222, 322) in the chordwise direction (Cd);
the airfoil (100, 200, 300) includes a mean camber line (118, 218, 318) extending a total camber length; and
each cooling hole outlet (132, 232, 332) of the plurality of cooling hole outlets (132, 232, 332) includes a midpoint (166, 266, 366), the plurality of cooling hole outlets (132, 232, 332) including a first cooling hole outlet (132a, 332a) defined as a cooling hole outlet (132, 232, 332) located axially nearest the leading edge (104, 204, 304), and a last cooling hole outlet (132i, 332i) defined as a cooling hole outlet (132, 232, 332) located axially nearest the trailing edge (106, 206, 306), with the midpoint (166, 266, 366) of the first cooling hole outlet (132a, 332a) being spaced axially a total distance from the midpoint (166, 266, 366) of the last cooling hole outlet (1321, 332i), with respect to the mean camber line (118, 218, 318); and
the total distance is greater than or equal to 15% and less than or equal to 90% of the total camber length (Lc).

4. The airfoil of any one of claims 1-3, wherein the first portion has a first cross-sectional area, and the second portion has a second cross-sectional area that is less than the first cross-sectional area.

5. The airfoil (100, 200, 300) of any of claims 1-4, wherein the cooling hole outlet (132, 232, 332) is oriented towards one of the leading edge (104, 204, 304) or the trailing edge (106, 206, 306).

6. The airfoil (100, 200, 300) of any of claims 1-5, wherein the first portion (134, 234, 334) has a first cross-sectional area, and the second portion (136, 236, 336) has a second cross-sectional area, with the first cross-sectional area and the second cross-sectional area have a respective shape being formed as one of an ellipse, a racetrack, a circle, or a polygon.

7. The airfoil (100, 200, 300) of claim 6, wherein the first portion (134, 234, 334) has a first hydraulic diameter (Dh1), the second portion (136, 236, 336) has a second hydraulic diameter (Dh2), and a summation of the first hydraulic diameter (Dh1) and the second hydraulic diameter (Dh2) is greater than or equal to 0.003 inches and less than or equal to 0.12 inches.

8. The airfoil (100, 200, 300) of any of claims 1-7, further comprising a fluid passage (138, 238, 338) opening at the cooling hole outlet (132, 232, 332), wherein the fluid passage (138, 238, 338) has:
a passage centerline (140, 240, 340) intersecting the cooling hole outlet (132, 232, 332) at a midpoint (166, 266, 366);
a covered portion (144, 244) having a radial width (D) with respect to the passage centerline (140, 240, 340), the covered portion (144, 244) defining a minimum cross-sectional area of the fluid passage (138, 238, 338); and
an uncovered portion (146, 246) extending between the covered portion (144, 244) and the cooling hole outlet (132, 232, 332).

9. The airfoil (100, 200, 300) of claim 8, wherein the passage centerline (140, 240, 340) intersects the cooling hole outlet (132, 232, 332) at a midpoint (166, 266, 366) that is located a spanwise distance (292) from the terminal end surface (128, 228, 328) in the spanwise direction (Sd) greater than or equal to 3 times the radial width of the covered portion (144, 244). and less than or equal to 10 times the radial width of the covered portion (144, 244).

10. The airfoil (100, 200, 300) of claim 8, wherein the passage centerline (140, 240, 340) intersects the cooling hole outlet (132, 232, 332) at a midpoint (166, 266, 366) that is located a radial distance (Rd1) from the terminal end surface (128, 228, 328), with respect to the passage centerline (140, 240, 340), the radial distance (Rd1) being greater than or equal to 0.25 times the radial width of the covered portion (144, 244) and less than or equal to 6 times the radial width (D) of the covered portion (144, 244).

11. The airfoil (100, 200, 300) of claim 8, wherein the cooling hole outlet (132, 232, 332) is included in a plurality of cooling hole outlets (132, 232, 332), with the midpoint (166, 266, 366)s of two adjacent cooling hole outlets (132, 232, 332) of the set of cooling hole cooling hole outlets (132, 232, 332) in the chordwise direction (Cd) being spaced a distance apart, the distance being greater than 0 times and less than or equal to 10 times the radial width of the covered portion (144, 244).

12. The airfoil (100, 200, 300) of claim 8, wherein:
the uncovered portion (146, 246) has a first surface (186, 286)e terminating at the terminal end surface (128, 228, 328) and a second surface (188, 288) terminating at the side surface (126, 226, 326); and
a first included angle (154) is formed between the first surface (186, 286)e and a first reference line extending the spanwise direction (Sd) from the covered portion (144, 244), the first included angle (154) being greater than or equal to -15 degrees and less than or equal to 25 degrees.

13. The airfoil (100, 200, 300) of claim 8, wherein:
the uncovered portion (146, 246) has a first surface (186, 286)e terminating at the terminal end surface (128, 228, 328) and a second surface (188, 288) terminating at the side surface (126, 226, 326); and
a second included angle (156) is formed between the second surface (188, 288) and a second reference line extending the spanwise direction (Sd) from the covered portion (144, 244), the second included angle (156) being greater than or equal to 50 degrees and less than or equal to 120 degrees.

14. The airfoil (100, 200, 300) of any of claims 1-13, wherein the tip rail (122, 222, 322) includes a protuberance (276) extending into the tip plenum (124, 224, 324) from the side surface (126, 226, 326), the cooling hole outlet (132, 232, 332) opening through the protuberance (276).

15. The airfoil (100, 200, 300) of any of claims 1-14, wherein the first portion (134, 234, 334) has a first hydraulic diameter (Dh1) and the second portion (136, 236, 336) has a second hydraulic diameter (Dh2), with the first hydraulic diameter (Dh1) being greater than or equal to 50% and less than or equal to 150% of the second hydraulic diameter (Dh2).
